(19) Europäisches Patentamt
European Patent Office
Office européen des brevets

(11) Veröffentlichungsnummer : **0 167 731**
**B1**

(12) # EUROPÄISCHE PATENTSCHRIFT

(45) Veröffentlichungstag der Patentschrift : **07.09.88**

(51) Int. Cl.⁴ : **C 08 G 18/81**, C 08 G 18/10, C 08 G 18/32, C 08 G 18/75

(21) Anmeldenummer : **85104951.0**

(22) Anmeldetag : **24.04.85**

(54) **Lagerstabile, NCO-freie Urethanharnstoffacrylate.**

(30) Priorität : **13.06.84 DE 3421826**

(43) Veröffentlichungstag der Anmeldung : **15.01.86 Patentblatt 86/03**

(45) Bekanntmachung des Hinweises auf die Patenterteilung : **07.09.88 Patentblatt 88/36**

(84) Benannte Vertragsstaaten : **AT BE CH DE FR GB IT LI NL SE**

(56) Entgegenhaltungen :
**EP-A- 0 015 593**
**DE-A- 3 106 367**
**FR-A- 2 393 827**
**US-A- 3 457 326**
**US-A- 4 108 840**
**CARL R. NOLLER, Lehrbuch der Organischen Chemie, Springer Verlag (1960), 332**
**Die Akte enthält technische Angaben, die nach dem Eingang der Anmeldung eingereicht wurden und die nicht in dieser Patentschrift enthalten sind.**

(73) Patentinhaber : **HÜLS AKTIENGESELLSCHAFT**
**- RSP Patente / PB 15 - Postfach 13 20**
**D-4370 Marl 1 (DE)**

(72) Erfinder : **Flakus, Werner, Dr.**
**Dürerstrasse 23**
**D-4350 Recklinghausen (DE)**

EP 0 167 731 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die nach Strahlenhärtung von Urethanacrylatharzen auf Basis aliphatischer oder cyclischer Isocyanate erzielbaren Filme und Beschichtungen weisen ein gutes Leistungsbild auf, etwa hinsichtlich der mechanischen Eigenschaften, der chemischen Resistenz gegenüber Lösungsmitteln, des Glanzes, des Verlaufs und der Lichtbeständigkeit.

An Unzulänglichkeiten sind zu nennen noch unbefriedigende Abriebswerte sowie mangelhaftes Haftvermögen in besonderem Maße auf Kunststoffsubstraten.

Es ist aus der Literatur hinreichend bekannt, daß diverse Thioverbindungen das Haftvermögen maßgeblich verbessern, wenn man diese den Harzen vor der Härtung zusetzt.

Der Nachteil ist eine erhebliche Geruchsbelästigung solcher Flüssigharze, ferner auch der gehärteten Beschichtungen, wobei auch toxische Gesichtspunkte in Rechnung gestellt werden müssen.

Eine Haftungsverbesserung der Beschichtung durch Nachtempern der Strahlengehärteten Beschichtung oberhalb 100 °C, ca. 20-30 min lang, zur Relaxation des verspannten Filmes, erwies sich als bescheiden wirksam und wenig praktikabel.

Überlegungen, wonach ein hohes Haftvermögen bei geringem Volumenschwund des Flüssigharzes nach der Härtung resultiert, konnten jedenfalls nicht schlüssig bestätigt werden.

Es wurde nun überraschenderweise gefunden, daß man zu hervorragender Haftung der Filme auf einer Vielzahl von Substraten und zudem zu lagerstabilen Harzen gelangt, wenn die strahlenhärtbaren Harze auf Isophorondiisocyanatbasis neben Urethan- und Acrylgruppen anteilsmäßig Harnstoff-Segmente chemisch vorgebildet enthalten und im wesentlichen NCO-frei sind.

Die Harnstoffbildung kann durch partielle Umsetzung NCO-haltiger Acrylderivate mit Wasser oder mit Diaminen in einfachster Weise, nämlich durch Umsetzung bei Raumtemperatur, erfolgen. Urethanacrylate auf Isophorondiisocyanatbasis sind gemäß DE-OS 29 05 205 bekannt.

Gemäß FR-A 2 393 827 ist ein Verfahren zur Beschichtung von vulkanisiertem Polyalkylengummi mittels einer Kombination eines ethylenisch ungesättigten PUR-Bindemittels, eines Vernetzers dafür sowie eines radikalischen Initiators bekannt. Das PUR-Bindemittel besteht aus einer Polyhydroxyverbindung, einem acrylischen Hydroxyester, einem Diisocyanat und einem Polyamin oder insbesondere einem Alkanolamin und enthält entweder freie NCO-Gruppen oder freie OH-Gruppen. Die Herstellung erfolgt in Lösemitteln. NCO-haltige — oder auch OH-haltige — Harze in Lösemitteln zeigen zwar bei entsprechender aufwendiger Handhabung eine gute Haftung, ihre Lagerstabilität ist aber gering.

Des weiteren betrifft die DE-A 31 06 367 Urethanacrylate aus Polyisocyanat, Hydroxyacrylat und Oxyester, wobei restliches NCO mit Monoaminen vernichtet wird. Da keine Kettenverlängerung vorliegt, ist das Leistungsbild der Harze nicht sehr hoch.

Gegenstand der Erfindung sind lagerstabile, im wesentlichen NCO-freie Urethanharnstoffacrylate, die nach Strahlenhärtung gut haftende, lösungsmittelbeständige Beschichtungen geringen Abriebs bilden, bestehend aus zu 10 bis 25 Äquivalent-% mit Hydroxyalkylacrylaten partiell acryliertem Isophorondiisocyanat bzw. dessen Isocyanurat, das anschließend zu 10 bis 75 Äquivalent-% mit Polyhydroxyverbindungen so umgesetzt wurde, daß ein Rest-NCO-Gehalt verbleibt, der danach mit primären oder sekundären Diaminoverbindungen mit 2 bis 18 C-Atomen oder Wasser unter Ausbildung von Harnstoffbindungen reagiert wurde.

Beansprucht wird auch die Herstellung der erfindungsgemäßen Urethanharnstoffacrylate wie in Anspruch 2 beschrieben.

Auf diese Weise werden Harze reproduzierbarer Stoffdaten und extrem hoher Lagerstabilität erzielt. Eine weitere herausragende Eigenschaft des unterschiedlich reaktive Gruppen enthaltenden Isophorondiisocyanates, seiner Addukte wie Derivate und Prepolymere ist eine bemerkenswerte Verträglichkeit mit einer Vielzahl chemischer Strukturen, so z. B. auch mit Diaminen. Auf diese Weise kann eine große Bandbreite unterschiedlich strukturierter Harnstoffanteile realisiert werden.

Zum Unterschied von Isophorondiisocyanat weisen zahlreiche cyclische oder aliphatische Diisocyanate ein hohes Maß an Unverträglichkeit bei der Umsetzung ihrer Prepolymeren mit primären Diaminen auf. Es kommt zur Gelierung, Trübung oder unbefriedigenden Lagerstabilitäten entsprechender Urethanharnstoffacrylate.

Überraschenderweise sind die erfindungsgemäß beanspruchten Urethanharnstoffacrylate und ihre reaktiven Verbindungen rascher zu härten als harnstofffreie Analogprodukte, wobei auch außerdem Fotoaktivatorzusätze reduzierbar sind.

Das Leistungsbild der erfindungsgemäß beanspruchten Urethanharnstoffacrylate übertrifft den Stand der Technik also durch folgende Prädikate :

1) hervorragende Haftung der gehärteten Filme auf Kunststoffen wie PVC, Polyester, Polyimid etc., gebondertem Metall

2) geruchsfreie oder geruchsarme Harze und Beschichtungen

3) kürzere Härtungszeiten, geringerer Fotoinitiatorbedarf und höhere Lagerstabilität der Harze

4) verbesserte mechanische Daten der gehärteten Filme, geringere Abriebswerte und verbesserte Lösungsmittelresistenz.

Eine Verbesserung der Lagerstabilität durch Harnstoffausbildung resultiert aus der praktisch vollständigen Umsetzung der NCO-Prepolymeren mit den einschlägigen Diaminen zu NCO-freien Harzen.

Im Falle harnstofffreier Urethanacrylate, die ausschließlich durch Umsetzung mit entsprechenden Hydroxylderivaten vollzogen werden, verbleiben real geringe NCO-Antiele (0,4 %-0,2 %) im Harz, die nach Lagerung durch Sekundärreaktion, wie z. B. mit Luftfeuchtigkeit, Viskositätsanstieg bewirken.

Dem Schema nach werden die erfindungsgemäß beanspruchten Urethanharnstoffacrylate in der Weise hergestellt, daß gemäß den Beispielen zunächst eine partielle Acrylierung des vorgegebenen Diisocyanates erfolgt. Sodann werden mittels Oxyestern oder Oxyethern weitere NCO-Anteile zur Umsetzung gebracht und der Restanteil an NCO-Äquivalenten durch Umsetzung mit vorgangs beschriebenen Diaminen quantitativ zu einem Neutralharz umgesetzt.

Es ist plausibel, daß sowohl die Äquivalente an Acryl-, Hydroxy- und Diamin-Verbindungen wie auch ihre Struktur den Harzcharakter und auch das Eigenschaftsbild der gehärteten Filme nachhaltig beeinflussen, wie die Beispiele belegen.

Je nach Viskosität der Reaktionsmischung ist eine anteilsmäßige Verwendung von ungesättigten, polymerisierbaren Verdünnungsmiteln geboten und vorteilhaft.

Formebild der Reaktionsschritte

1. Reaktionsstufe : Acrylierung des Diisocyanats mit Hydroxyalkylacrylsäureestern

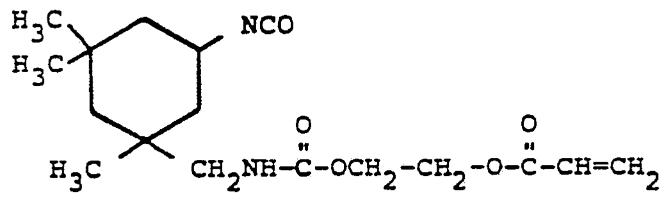

partiell acryliertes IPDI

2. Reaktionsstufe : Acrylurethanharzbildung mit Oxyestern(ethern)

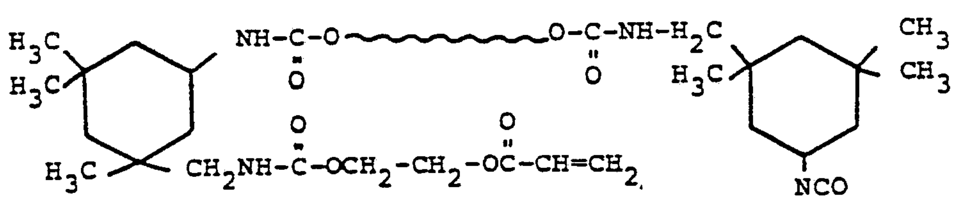

Urethanharz-NCO-endständig

3. Reaktionsstufe : Acrylurethan-harnstoff-harzbildung mit Diaminoverbindungen

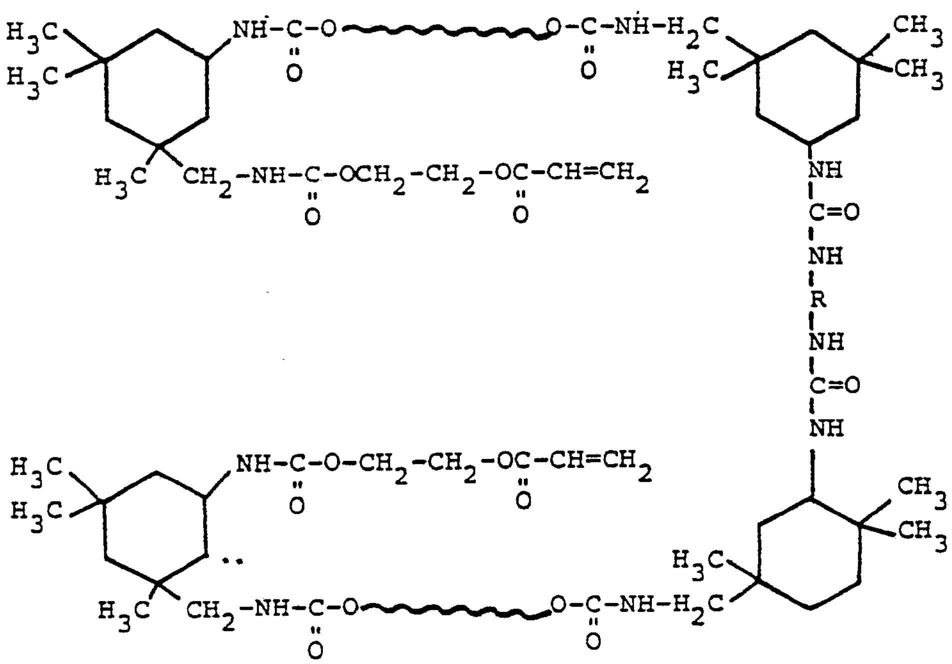

Im Hinblick auf eine gesicherte Lagerstabilität der Produkte, die über 6 Monate 60 °C Dunkellagerung erfüllt wird, sind die Reaktionsschritte der Harzbildung nach dem beschriebenen Schema durchzuführen. Auf diese Weise werden gelfreie Produkte reproduzierbarer Viskositätslage der Harze und der mechanischen Daten der gehärteten Filme erzielt.

Neben Isophorondiisocyanat sind zur Herstellung der erfindungsgemäß beanspruchten Harze auch dessen Isocyanurat geeignet.

Für die Acrylierung der vorgenannten Isocyanate oder deren Addukte eignen sich Hydroxyalkylacrylate, z. B. Hydroxyethylacrylat, die in bekannter Weise durch Umsetzung von Acrylsäure mit einschlägigen Epoxyverbindungen erhalten werden.

Nach partieller Acrylierung des Diisocyanates wird durch Umsetzung weiterer NCO-Äquivalente mit Oxyestern oder Oxyethern das Eigenschaftsbild der nach Härtung vorliegenden Filme und Beschichtungen eingestellt. Diese zur Verwendung gelangenden Polyhydroxy-Verbindungen könen di-, tri- oder tetrafunktionelle Hydroxylverbindungen vorstellen und aliphatischer, cyclischer oder aromatischer Struktur sein oder Mischungen derselben vorstehen. Das Molekulargewicht dieser Polyhydroxyverbindungen kann 100-5 000 betragen, vorzugsweise verwendet man solche im Bereich von 500-2 000, die im Handel erhältlich sind.

Für die Harnstoffbildung der erfindungsgemäß beanspruchten Harze sind sowohl aliphatische, cycloaliphatische oder aromatische primäre wie auch sekundäre Diamine oder primärsekundäre Diamine der Kohlenstoffkettenlänge $C_2$ bis $C_{18}$ verwendbar. Auch können die zur Herstellung der erfindungsgemäßen Harze verwendeten Diamine Carbonsäureestergruppen enthalten, wie sie z. B. bei der Addition von Acryl- oder Methacrylestern an Diamine gebildet werden :

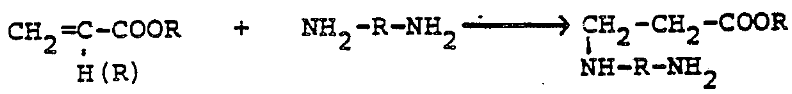
bzw.

primär-sekundärer
Diamin-Ester

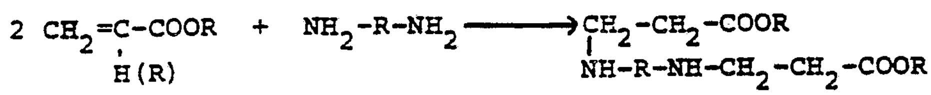

di-sekundärer
Diamin-Ester

Zur Einstellung applikationsmäßig erwünschter Viskositätslagen der Harze ist die Verwendung von sogenannten Reaktivverdünnern, d. h. von ungesättigten Monomeren, möglich. Als Reaktivverdünner können höher siedende Acrylester, N-Vinylpyrrolidon und eine Vielzahl anderer allgemein bekannter ungesättigter Verbindungen verwendet werden.

Bei der Herstellung der Harze können auch einschlägige Fotoinitiatoren, wie z. B. Benzoinether, Acetophenonderivate etc. dem Harz beigemischt werden (1-2 %). Für den Fall der Elektronenstrahlhärtung unterbleiben Zusätze solcher Art. Auch kann es zweckmäßig sein, UV-Stabilisatoren dem Harz bereits bei der Herstellung zuzusetzen, wie z. B. Hindered Amine Light Stabilizer/HALS-Derivate (1-2 %).

Die Harze sind durch UV-Strahlen, Elektronenstrahlen oder peroxidische Katalyse härtbar.

## Beispiel 1 (Vergleich)

Urethanacrylatharz, Basis : IPDI-Oxyether

In eine Vorlage von 444 g IPDI (2 Mol) und 0,068 g Dibutylzinnlaurat (DBTL) werden unter Rühren innerhalb von ca. 2 Stunden 238,8 g 2-Hydroxyethylacrylat (OH-Zahl = 469 mg KOH/g) (2 Mol) zugetropft. Die Umsetzung erfolgt unter Kühlung bei 20-25 °C bis zum NCO-Gehalt der Lösung von 12,3-12,4 Gewichtsprozent. Nach Zusatz von 1,27 g DBTL und 0,33 g Hydrochinon wird das Reaktionsprodukt auf 60-70 °C erhitzt und innerhalb von 2-3 Stunden mit 658,8 g Polytetrahydrofuranether, MG = ca. 650, OH-Zahl = 170 mg KOH/g (1 Mol) versetzt (Terathane®650 der Firma DuPont), bei dieser Temperatur 2-3 weitere Stunden bis zur Ausbildung eines weitgehend NCO-freien Harzes (NCO-Gehalt < 0,25 Gewichtsprozent) gerührt.

Die Viskosität des Harzes beträgt bei 60 °C 5 800-6 000 mPa · s.

Die Dunkellagerstabilität bei 60 °C ist > 6 Monate.

Stahlblech- und Foliendaten nach Härtung des Harzes bei Zusatz von 2,5 Gewichtsprozent 1-(4-Isopropylphenyl)-2-hydroxy-2-methylpropan-1-on (DAROCUR® 1116 der Firma Merck, Darmstadt) mit 80 Watt/cm in 5 Sekunden :

| | |
|---|---|
| Pendelhärte nach König (sek) gemäß DIN 53 157 | 30 |
| Erichsentiefung (mm) gemäß DIN 53 156 | > 10 |
| Schichtdicke (μm) | 65 |
| Bruchspannung (N/mm²) gemäß DIN 53 455 | 17,9 ± 1,5 |
| Bruchdehnung (%) | 54,0 ± 6,0 |

## Beispiel 2 (Vergleich)

Urethanacrylatharz, Basis : IPDI-Oxyester

In Analogie zu Beispiel 1 ; jedoch wird die 2. Reaktionsstufe durch Umsetzung von 1 037 g eines Oxyesters der Basis Adipinsäure, Hexandiol-1.6, Neopentylglykol im Molverhältnis 4 : 2 : 3, OH-Zahl = 108 mg KOH/g Substanz vorgenommen.

NCO-Gehalt 0,25-0,30 Gewichtsprozent, Viskosität bei 60 °C 7 750-7 850 mPa · s, Dunkellagerstabilität bei 60 °C > 6 Monate. Stahlblech- und Foliendaten nach Härtung des Harzes bei Zusatz von 2,5 Gewichtsprozent DAROCUR® 1116 der Firma Merck, mit 80 Watt/cm in 5 Sekunden :

| | |
|---|---|
| Pendelhärte nach König (sek) gemäß DIN 53 157 | 21 |
| Erichsentiefung (mm) gemäß DIN 53 156 | > 10 |
| Bruchspannung (N/mm²) gemäß DIN 53 455 | 6,8 ± 0,4 |
| Bruchdehnung (%) | 64,0 ± 4,0 |

## Beispiel 3

Urethanharnstoffacrylatharz, Basis : IPDI-Polyether-prim. Diamin

In Analogie zu Beispiel 1 kommen in der 1. Reaktionsstufe 666 g IPDI (3 Mol) mit 179,1 g 2-Hydroxyethylacrylat zur Umsetzung, bis zum NCO-Gehalt von 22,36 Gewichtsprozent. Sodann werden in der 2. Reaktionsstufe 477,3 g TERATHANE[R] 650 der Firma DuPont (0,75 Mol) bei 50-60 °C eingetragen. Der NCO-Gehalt beträgt nach Beendigung der Reaktion 9,52 Gewichtsprozent. Schließlich verdünnt man mit 633 g Ethylhexylacrylat, 400 g N-Vinylpyrrolidon. Nach Zugabe von 0,4 g Phenothiazin trägt man bei ca. 30 °C eine Lösung von 225,1 g 2.2.4-Trimethylhexamethylendiamin (TMD) und 233 g N-Vinylpyrrolidon unter Rühren in das Reaktionsgemisch ein und erhält ein praktisch NCO-freies Urethanharnstoffacrylatharz vom NCO-Gehalt < 0,1 Gewichtsprozent.

Die Viskosität des Harzes beträgt bei 25 °C 11 500-12 000 mPa · s.

Die Dunkellagerstabilität bei 60 °C ist > 8 Monate.

Stahlblech- und Foliendaten nach Härtung des Harzes bei Zusatz von 1,0 Gewichtsprozent DAROCUR® 1116 der Firma Merck, mit 80 Watt/cm in 3-4 Sekunden :

| | |
|---|---|
| Pendelhärte nach König (sek) gemäß DIN 53 157 | 152 |
| Erichsentiefung (mm) gemäß DIN 53 156 | > 10 |
| Schichtdicke (μm) | 88 |
| Bruchspannung (N/mm²) gemäß DIN 53 455 | 42,2 ± 1,1 |
| Bruchdehnung (%) | 5,0 ± 1,0 |

## Beispiel 4

Urethanharnstoffacrylatharz, Basis : IPDI-Polyether-prim./sek.-Diaminoester

In Analogie zu Beispiel 3 werden alle Reaktanten zur Umsetzung gebracht, jedoch im letzten Reaktionsschritt anstelle von TMD das Additionsprodukt von TMD und Methacrylsäuremethylester

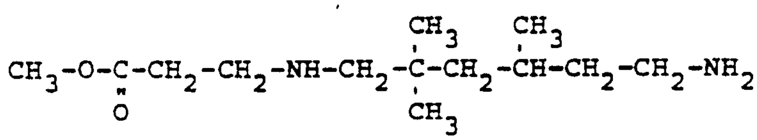

(im Molverhältnis 1 : 1) und zwar 367,6 g (1,425 Mol). Der NCO-Gehalt des Harzes beträgt < 0,1 Gewichtsprozent. Die Viskosität des Harzes beträgt bei 25 °C 4 500-4 600 mPa · s. Die Dunkellagerstabilität bei 60 °C ist > 8 Monate.

Stahlblech- und Foliendaten nach Härtung des Harzes bei Zusatz von 1,0 Gewichtsprozent DAROCUR® 1116 der Firma Merck, mit 80 Watt/cm in 3-4 Sekunden :

| | |
|---|---|
| Pendelhärte nach König (sek) | 135 |
| gemäß DIN 53 157 | |
| Erichsentiefung (mm) | 9,5 |
| gemäß DIN 53 156 | |
| Schichtdicke (µm) | 160 |
| Bruchspannung (N/mm²) | 40,6 ± 0,7 |
| gemäß DIN 53 455 | |
| Bruchdehnung (%) | 7,0 ± 1,0 |

Beispiel 5

Urethanharnstoffacrylatharz, Basis : IPDI-Polyether-di-sek.-Diaminoester

Herstellung analog zu Beispiel 3, jedoch mit 510 g (1,425 Mol) Additionsprodukt von TMD und Methacrylsäuremethylester (im Molverhältnis 1 : 2) im letzten Reaktionsschritt. NCO-Gehalt < 0,1 Gewichtsprozent.

Die Viskosität des Harzes beträgt bei 25 °C 4 000 - 4 200 mPa · s. Die Dunkellagerstabilität bei 60 °C ist > 8 Monate.

Stahlblech- und Foliendaten nach Härtung wie vorgangs :

| | |
|---|---|
| Pendelhärte nach König (sek) | 140 |
| gemäß DIN 54 157 | |
| Erichsentiefung (mm) | 9,4 |
| gemäß DIN 53 156 | |
| Schichtdicke (µm) | 152 |
| Bruchspannung (N/mm²) | 42,1 ± 0,3 |
| gemäß DIN 53 455 | |
| Bruchdehnung (%) | 7,0 ± 1,0 |

Beispiel 6

Urethanharnstoffacrylatharz, Basis : IPDI-Polyether-di-sek.-Diamin

Herstellung analog zu Beispiel 3, jedoch mit 205 g Bis-(isopropylamino)ethan-1.2 (1,425 Mol) im letzten Reaktionsschritt. NCO-Gehalt < 0,1 Gewichtsprozent.

Die Viskosität des Harzes beträgt bei 25 °C 2 600-2 700 mPa · s. Die Dunkellagerstabilität bei 60 °C ist > 8 Monate.

Stahlblech- und Foliendaten nach Härtung wie vorgangs :

| | |
|---|---|
| Pendelhärte nach König (sek) | 133 |
| gemäß DIN 53 157 | |
| Erichsentiefung (mm) | 9,3 |
| gemäß DIN 53 156 | |
| Schichtdicke (µm) | 90 |
| Bruchspannung (N/m²) | 41,2 ± 2,8 |
| gemäß DIN 53 455 | |
| Bruchdehnung (%) | 2,0 ± 0,0 |

Beispiel 7

Urethanharnstoffacrylatharz, Basis : IPDI-Polyether-Wasser

Herstellung analog zu Beispiel 3, jedoch mit 25,6 g Wasser (1,425 Mol) im letzten Reaktionsschritt.

Die Viskosität des Harzes beträgt bei 25 °C 1 500-1 600 mPa · s. Der NCO-Gehalt des Harzes ist < 0,2 Gewichtsprozent. Die Dunkellagerstabilität bei 60 °C ist > 8 Monate.

Stahlblech- und Foliendaten nach Härtung wie vorgangs :

| | |
|---|---|
| Pendelhärte nach König (sek) | 110 |
| gemäß DIN 53 157 | |

| | |
|---|---|
| Erichsentiefung (mm) gemäß DIN 53 156 | > 10 |
| Schichtdicke (µm) | 141 |
| Bruchspannung (N/mm²) gemäß DIN 53 455 | 35,2 ± 0,5 |
| Bruchdehnung (%) | 6,0 ± 1,0 |

Beispiel 8 (Vergleich)

Urethanharnstoffacrylatharz, Basis : IPDI-Polyether-$C_{36}$-Diamin[+]

Herstellung analog zu Beispiel 3, jedoch 3 Mol IPDI, 1,5 Mol 2-Hydroxyethylacrylat, 954,6 g TERATHANE® 650 der Firma DuPont (OHZ 176), 1,5 Mol, 376,2 g $C_{36}$-Diamin 0,7125 Mol, 890,1 g 2-Ethylhexylacrylat, 890,1 g n-Vinylpyrrolidon.

| | |
|---|---|
| NCO-Gehalt des Harzes | < 0,2 Gewichtsprozent |
| Viskosität 25 °C | 800-900 mPa · s |
| Dunkellagerstabilität 60 °C | < 5 Tage |

Stahlblech- und Foliendaten nach Härtung wie vorgangs :

| | |
|---|---|
| Pendelhärte nach König (sek) gemäß DIN 53 157 | 15 |
| Erichsentiefung (mm) gemäß DIN 53 156 | > 10,0 |
| Schichtdicke (µm) | 90 |
| Bruchspannung (N/mm²) gemäß DIN 53 455 | 12,4 ± 1,2 |
| Bruchdehnung (%) | 124 ± 5 |

[+] $C_{36}$-Diamin stellt ein ungesättigtes Diamin, etwaiger nachstehender Strukturformel vor :

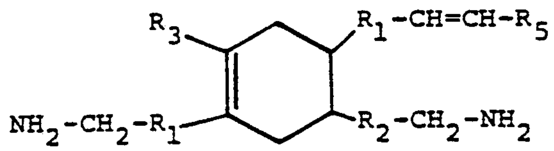

Es ist herstellbar aus 2fach ungesättigten Fettsäuren $C_{18}$-Schnitt durch Diensynthese, Nitrilierung und Aminierung.

Beispiel 9 (Vergleich)

Urethanharnstoffacrylatharz, Basis : Hylene W-Polyether-Wasser (Hylene W ist Diisocyanato-dicyclohexylmethan der Firma DuPont)

Herstellung analog zu Beispiel 7, jedoch ausgehend von 786 g Hylene W (3 Mol).

| | |
|---|---|
| NCO-Gehalt des Harzes | < 0,3 Gewichtsprozent |
| Viskosität 25 °C | 28 500-30 000 mPa · s |
| Dunkellagerstabilität 60 °C | < 3 Tage |

Stahlblech- und Foliendaten nach Härtung wie vorgangs :

| | |
|---|---|
| Pendelhärte nach König (sek) gemäß DIN 53 157 | 133 |
| Erichsentiefung (mm) gemäß DIN 53 156 | 8,3 |
| Schichtdicke (µm) | 90 |
| Bruchspannung (N/mm²) gemäß DIN 53 455 | 34,0 ± 2,2 |
| Bruchdehnung (%) | 6 ± 1 |

Beispiel 10 (Vergleich)

Urethanharnstoffacrylatharz, Basis : TMDI-Polyether-Wasser (TMDI ist Trimethylhexamethylendiisocyanat der Firma Hüls AG) Herstellung analog zu Beispiel 7, jedoch ausgehend von 630 g TMDI (3 Mol).

| | |
|---|---|
| NCO-Gehalt des Harzes | < 0,3 Gewichtsprozent |
| Viskosität 25 °C | 480-600 mPa · s |
| Dunkellagerstabilität 60 °C | < 5 Tage |

Stahlblech- und Foliendaten nach Härtung wie vorgangs :

| | |
|---|---|
| Pendelhärte nach König (sek) gemäß DIN 53 157 | 26 |
| Erichsentiefung (mm) gemäß DIN 53 156 | > 10,0 |
| Schichtdicke (μm) | 85 |
| Bruchspannung ($N/mm^2$) gemäß DIN 53 455 | 14,0 ± 0,8 |
| Bruchdehnung (%) | 96 ± 4 |

(Siehe Tabelle Seite 9f.)

Tabelle : Vergleich spezifischer Eigenschaften von Urethan- und Urethanharnstoff-Acrylharzen hergestellt gemäß oder in Analogie der Beispiele 1-9. Hartungsbedingungen 80 Watt/cm UV-Mittel-Drucklompe

| lfd. Nr. | Zusammensetzung des Harzes: ① HEA (Mol) | Poly-isocyanat (Mol) | Polyhydroxy-komponente (Mol) | Diamin (Mol) | $H_2O$ (Mol) | Dunkellager-stabilität bei 60 °C | UV-Härtung: Zeit (sek) | Fotoinitiatormenge (%) | Filmeigenschaften der gehärteten Filme: Pendelhärte n. König (sek) | ② Taber Abrieb (mg) | Haftung auf Kunststoff | Aceton (cyclen) | MEK (cyclen) | Methanol (cyclen) | EGA (cyclen) |
|---|---|---|---|---|---|---|---|---|---|---|---|---|---|---|---|
| 1 | . | 2 IPDI | 1 TERATHANE 650 | - | - | > 6 Monate | 5 | 2,5 | 30 | 37 | schlecht | > 150 | > 150 | > 150 | > 150 |
| 2 | 2 | 2 IPDI | ③ AS, HD, NPG (4 : 2 : 3) | - | - | > 6 Monate | 5 | 2,5 | 21 | 30 | schlecht | > 150 | > 150 | > 150 | > 150 |
| 3 | 1,5 | 3 IPDI | 0,75 TERATHANE 650 | 1,425 IPD | - | > 8 Monate | 4 | 1,0 | 152 | 22 | sehr gut | > 150 | > 150 | > 150 | > 150 |
| 4 | 1,5 | 3 IPDI | 0,75 TERATHANE 650 | 1,425 IPD/ Methacrylsre.methylester (1:1) | - | > 8 Monate | 4 | 1,0 | 135 | 18 | sehr gut | > 150 | > 150 | > 150 | > 150 |
| 5 | 1,5 | 3 IPDI | 0,75 TERATHANE 650 | 1,425 IPD/ Methacrylsre.methylester (1:2) | - | > 8 Monate | 4 | 1,0 | 140 | 15 | sehr gut | 120 | 90 | > 150 | > 150 |
| 6 | 1,5 | 3 IPDI | 0,75 TERATHANE 650 | 1,425 Bis-(isopropylamino)-ethan-1.2 | - | > 8 Monate | 4 | 1,0 | 133 | 13 | sehr gut | > 150 | > 150 | > 150 | > 150 |
| 7 | 1,5 | 3 IPDI | 0,75 TERATHANE 650 | - | 1,425 | > 8 Monate | 4 | 1,0 | 110 | 14 | sehr gut | > 150 | > 150 | > 150 | > 150 |
| 8 | 1,5 | 3 IPDI | 1,5 TERATHANE 650 | 0,7125 Mol unges. $C_{36}$-Diamin | - | < 5 Tage | 4 | 1,0 | 15 | 17 | sehr gut | 60 | 30 | 60 | 50 |
| 9 | 1,5 | 3 Hylene W | 0,75 TERATHANE 650 | - | 1,425 | < 3 Tage | 4 | 1,0 | 133 | 15 | sehr gut | > 150 | > 150 | > 150 | > 150 |
| 10 | 1,5 | 3 TMDI | 0,75 TERATHANE 650 | - | 1,425 | < 5 Tage | 4 | 1,0 | 26 | 11 | schlecht | 120 | 120 | > 150 | > 150 |

① HEA = Hydroxyethylacrylat / ② H 22 Rolle, 500 g Belastung, 100 U / ③ Adipinsäure, Hexandiol, Neopentylglykol

## Patentansprüche

1. Lagerstabile, im wesentlichen NCO-freie Urethanharnstoffacrylate, die nach Strahlenhärtung gut haftende, lösungsmittelbeständige Beschichtungen geringen Abriebs bilden, bestehend aus zu 10 bis 25 Äquivalent-% mit Hydroxyalkylacrylaten partiell acryliertem Isophorondiisocyanat bzw. dessen Isocyanurat, das anschließend zu 10 bis 75 Äquivalent-% mit Polyhydroxyverbindungen so umgesetzt wurde, daß ein Rest-NCO-Gehalt verbleibt, der danach mit primären oder sekundären Diaminoverbindungen mit 2 bis 18 C-Atomen oder Wasser unter Ausbildung von Harnstoffbindungen reagiert wurde.

2. Verfahren zur Herstellung lagerstabiler, im wesentlichen NCO-freier Urethanharnstoffacrylate nach Anspruch 1, dadurch gekennzeichnet, daß Isophorondiisocyanat bzw. dessen Isocyanurat zu 10 bis 25 Äquivalent-% mit Hydroxyacrylaten bei 20 bis 25 °C und mit Dibutylzinndilaurat als Katalysator partiell acryliert wird, 20 bis 75 Äquivalent-% des gebildeten NCO-haltigen Umsetzungsproduktes mit Polyhydroxyverbindungen bei 60 bis 70 °C unter katalytischer Aktivierung so umgesetzt wird, daß ein Rest-NCO-Gehalt verbleibt, der danach mit primären oder sekundären Diaminoverbindungen mit 2 bis 18 C-Atomen oder Wasser bei 20 bis 25 °C unter Ausbildung von Harnstoffbindungen reagiert.

## Claims

1. An essentially NCO-free urethane-urea acrylate which is stable on storage and, after curing by radiation forms solvent-resistant coatings of good adhesion and low abrasion, composed of isophorone diisocyanate or isocyanurate which has been partially acrylated to the extent of 10 to 25 equivalent % hydroxyalkyl acrylates and has then been reacted to the extent of 10 to 75 equivalent % with polyhydroxy compounds in such a way that a residual NCO content remains, which has then been reacted with primary or secondary diamino compounds having 2 to 18 C atoms or water with the formation of urea bonds.

2. A process for the preparation of an essentially NCO-free urethane-urea acrylate which is stable on storage, according to claim 1, characterized in that isophorone diisocyanate or isocyanurate is partially acrylated to the extent of 10 to 25 equivalent % with hydroxyacrylates at 20 to 25 °C, using dibutyltin dilaurate as catalyst, 20 to 75 equivalent % of the resulting NCO-containing reaction product is reacted with polyhydroxy compounds at 60 to 70 °C, with activation by catalysts, in such a way that a residual NCO content remains, which then reacts with primary or secondary diamino compounds having 2 to 18 C atoms or water at 20 to 25 °C with the formation of urea bonds.

## Revendications

1. Carbamyl-acrylates d'uréthanne stables au stockage, essentiellement exempts de NCO, qui constituent, après durcissement aux rayons, des revêtements qui possèdent une bonne résistance à l'abrasion, une bonne adhérence et qui résistent aux solvants, composés par du di-isocyanate d'isophorone partiellement acrylé pour 10 à 25 % équivalents avec des acrylates d'hydroxy-alkyle, ou par son isocyanurate, que l'on a ensuite fait réagir pour 10 à 75 % équivalents, sur des composés polyhydroxylés, de telle sorte que subsiste une teneur résiduelle en NCO, que l'on a ensuite fait réagir sur des composés diaminés primaires ou secondaires comportant de 2 à 18 atomes de carbone ou sur de l'eau, avec formation de liaisons urée.

2. Procédé de préparation de carbamyl-acrylates d'uréthanne stables au stockage, essentiellement exempts de NCO, selon la revendication 1, caractérisé par le fait que l'on acryle partiellement du di-isocyanate d'isophorone ou son isocyanurate pour 10 à 25 % équivalents avec des hydroxy-acrylates, à une température de 20 à 25 °C, et avec du dilaurate de dibutyl-étain comme catalyseur, que l'on fait réagir 20 à 75 % équivalents du produit de réaction formé, contenant NCO, sur des composés polyhydroxylés, à une température de 60 à 70 °C, en procédant à une activation catalytique, de telle sorte que subsiste une teneur résiduelle en NCO, qui réagisse ensuite sur des composés diaminés primaires ou secondaires comportant de 2 à 18 atomes de carbone, ou sur de l'eau, à une température de 20 à 25 °C, avec formation de liaisons urée.